# EUROPEAN PATENT SPECIFICATION

(11) **EP 3 402 589 B1**
(45) Date of publication and mention of the grant of the patent: **19.08.2020**
(21) Application number: 17739062.2
(22) Date of filing: 13.01.2017
(51) Int. Cl.: B01F 3/04, C02F 3/20, F16L 3/08, F16L 3/10

(54) **DUAL CONTROL LATERAL AIR MANIFOLD ASSEMBLY**
DOPPELT GESTEUERTE SEITENLUFTVERTEILERANORDNUNG
ENSEMBLE COLLECTEUR D'AIR LATÉRAL À DOUBLE COMMANDE

(30) Priority: 15.01.2016 US 201614997328
(43) Date of publication of application: 21.11.2018
(73) Proprietor: Jaeger, Claudius, Boulder, CO 80304 (US)
(72) Inventor: Jaeger, Claudius, Boulder, CO 80304 (US)
(74) Representative: Feucker, Max Martin
(86) International application number: PCT/US2017/013473
(87) International publication number: WO 2017/123971

(56) References cited:
- WO-A1-2006/063538
- CA-A1- 2 313 135
- JP-A- H11 132 574
- US-A- 2 815 943
- US-A- 4 012 470
- US-A- 4 135 492
- US-A- 4 823 771
- US-A- 5 057 284
- US-A- 5 227 136
- US-A- 5 587 114
- US-A- 5 851 447
- US-A- 5 868 971
- US-A- 6 086 056
- US-A1- 2006 033 220
- US-A1- 2007 126 135
- US-A1- 2011 084 416
- US-B1- 6 173 926
- US-B2- 7 267 766

## Description

### Background of the Invention

The present invention relates generally to aeration assemblies that are utilized in the gasification of liquids, especially for the aeration of water. In particular, the present invention relates to a dual control lateral air manifold assembly for use in water treatment applications that provide improved efficiency and lower costs.

Activated sludge systems are used to break down organic solids in wastewater by aerobic digestion from microorganisms (biomass). The organisms are then recycled and the remaining products are treated water and waste solids. Carbonaceous Biochemical Oxygen Demand (CBOD) is the amount of carbon-based organic matter in the water that is biodegradable. It is measured as Biochemical Oxygen Demand (BOD). Since this organic matter depletes oxygen in the water, the goal is to remove the organic solids in the water and lower the BOD level. This is also known as BOD removal. The level of BOD is controlled so that the final decanted water can be released into streams or rivers.

The basic equation for treating BOD with the activated sludge process is BOD + O₂ + Bacteria → CO₂ + H₂O (BOD + Oxygen → Carbon Dioxide + Water).

Since the microorganisms use oxygen to break down the suspended solids (SS), oxygen must be introduced into the mixture of water and solids. This mixture is called Mixed Liquor Suspended Solids (MLSS). The amount of oxygen must be great enough for the biomass to break down the solids in the resident time in the waste tank. In order to maximize the amount of oxygen that is dissolved in the water (DO), the oxygen transfer efficiency (OTE) is examined. The more oxygen, the better the biomass can feed and maintain the proper biomass to solids ratio (F:M). The organisms and solids form into an aggregate called floc.

Biological nutrient remove is also a part of the activated sludge process, since nitrogen and phosphorus are elements which can promote the growth of noxious algae in surface waters that received treated waste water. Another demand of oxygen in an activated sludge process is created by oxidizing ammonia to nitrates (nitrification). Nitrification in aerated/aerobic zones or process phases involves the general formula:
Sequence 1: Bacteria oxidize ammonia to nitride while consuming oxygen
   2NH₄₊ (ammonia) + 3O₂₋ (oxygen) → 2NO₂₋ (nitrite)+ 2H₂O (water) + 4H+ (strong acid)
Sequence 2: Bacteria oxidize nitrite to nitrate:
   2NO₂ + O₂ → 2NO₃

De-nitrification occurs in a non-aerated/anoxic zone or SBR (Sequencing Bath Reactor) sequence. The nitrate (NO₃) from the nitrification zone/sequence is fed back to and mixed with the activated sludge aerobic zone/SBR sequence.

The base equation for de-nitrification is as follows:

BOS + NO₃ (or NO₂ = 4H+ → CO₂ + N₂ + H₂0

Phosphorus (P) removal involves an anaerobic zone/sequence → aerobic zone/sequence.

Various types of water-treatment apparatus have been developed and are used, for example, in clarification plants/waste water-processing aerobic digestion tanks. In a typical system, a plurality of aeration elements are disposed on a distribution conduit, whereby the distribution conduit on the one hand serves for the supply of air or gas to the aeration elements, and on the other hand also serves for the securement of the aeration elements. A plurality of distribution conduits can in turn be combined to form a system.

U.S. Patent No. 5,015,421 to Messner describes a diffusion device that uses a flexible membrane on a rigid, plate-like aeration support element. Due to the structure of the rigid plate that serves as a substrate for the flexible membrane, when the aerating gas bubbles are released through openings provided in the membrane, or when the flow of aerating gas is stopped, the membrane can crease or wrinkle at specific points along the supporting plate, thus causing fatigue and wear at these points and reduced longevity of the aeration element.

An elongated aeration element is disclosed in DE 33 19 161A1. In addition, DE 36 00 234 discloses an apparatus for the aeration of water, according to which individual aeration elements are connected with the distribution conduit via fittings that during assembly are pressed into a bore in the distribution conduit accompanied by elastic deformation, thereby forming a positive connection. However, the aeration elements are plate-shaped elements. Such a connection is not suitable for elongated aeration elements, which can have an aeration length of up to and greater than one meter. When the apparatus moves or if there are flows in the liquid that is to be aerated, the long aeration elements act like lever arms, so that the forces that occur at the connection locations are much greater than is the case with plate-shaped aeration elements.

U.S. Patent 7,497,421 (U.S. '421) by the same inventor describes an apparatus for gasification of liquids. U.S. '421 describes a device in which compressed gas is introduced into a tubular aeration element made up of rigid support tube with a lengthwise, rounded groove and a flexible membrane disposed around the tube. The gas escapes via slits in the membrane. A specialized fitting is provided for attaching the aeration element to a distribution conduit. The tubular aeration element, however, is limited in its aerating efficiency, due to the limited cross sectional area provided for releasing the aerating gas and bubbles into the surrounding volume of liquid.

None of the above art provides an elongated, flattened aeration element with an oval cross section and increased surface area efficiency, which is specifically designed to allow a flexible, inflatable membrane placed around a support member to expand and collapse during operation without fatigue, wear, and a shortened longevity of the aeration element components.

Further, none of the above cited art provides a means for preventing sludge or other particles from entering the interior of the aeration element during use, which can impair or completely inhibit functioning. This can occur if there is a breach of the membrane by an external impact of a sharp object or debris in the surrounding liquid. A backflow of particles or sludge is inhibited by the fine slits of the perforated membrane, acting as check valves in a deflated state of the membrane.

US 2006/0033220 A discloses an aeration assembly according to the preamble of claim 1.

### Summary of the Invention

It is an object of the present invention to provide an aeration assembly, which utilizes more than one air control mechanism, which allows a more efficient, space saving arrangement of the aeration elements and provides substantial cost savings for water treatment facilities

The object of the present invention is realized with an aeration assembly according to claim 1.

An exemplary embodiment is realized with a flattened, elongated aeration element having support member with a substantially oval cross-section, an elastomeric and flexible tubular membrane having air slits provided only on a top surface of the aeration element when the membrane is placed around the aeration element, and an air inlet with a threaded connection to connection the aeration element to a distribution conduit that serves for the supply of gas or air.

The support member of the aeration element is made up of a rigid, hard plastic material having a corrugated, hollow profiled and with corrugated outer surfaces, such that a plurality of grooves are formed between the ridges of the corrugated surfaces, both on the inner and outer surfaces of the support member.

The aeration element is provided with a clamp for retaining in place the membrane and further, the support includes a machine bead to prevent the clamp from slipping and to maintain the membrane under an axial, lengthwise tension, thereby preventing the membrane from slipping off the support member during use.

The aeration element can be provided with a check valve in the form of an opening in the upper surface of support member and an optional, second port on the bottom surface for condensation water purge. The check valve works in cooperation with a flexible, elastomeric membrane or flap to perform a back flow or check valve function that presents sludge and other materials, in the event the membrane was accidentally breached, or cut by an hard object floating in the sludge or during assembly of the system or operators servicing the system. However, liquid from condensation or backflow through the membrane is prevented from entering into the air supply system when the air is shut off during a intermitted cycle for de-nitrification and/or an anaerobic phase of the operating batch cycle of the biological processes sequence.

The aeration element further is provided with a mounting or support bracket for supporting or fixing in position the end(s) of the elongated aeration element when in use in an aeration system in a clarification tank or pool/pond, for example, by securing the mounting or support bracket to a floor or other surface of the tank or pool.

Pursuant to an exemplary embodiment, aeration elements are respectively disposed in pairs on opposite locations on the distribution conduit, whereby in a given cross-sectional plane, the distribution conduit is provided at two oppositely disposed locations with bores through which a single bolt passes that connects the two aeration elements with one another. In this way, the support of the bolt relative to the wall of the distribution conduit is effected by the respective other aeration element. The aeration elements thus reciprocally support one another, and the apparatus can make do with a minimum number of parts.

It is also contemplated that the two head pieces of the aeration elements are pressed into the extruded profiled secured with a rubber liner or friction gasket, rather than using screws or bolts to secure the assembly.

The head piece's conical section, or wedge, protrudes into a friction gasket, whose inside contour is funnel-shaped. By pressing in the wedge-shaped section of the head piece, the friction gasket expands outwards against the inner contour of the hollow corrugated hard plastic extrusion, forms a seal and fastens the head pieces securely into the corrugated extrusion pieces. The high friction (coefficient) and the expansion of the rubber gasket/ friction assembly mount prevent the assembly from coming apart again.

The head piece and corrugated profile can also alternatively be fused together by gluing, welding, friction welding and over-molding.

The aeration elements also can be secured in place by means of an assembly bracket having cooperating upper and lower profiled portions that can be secured around the aeration element. The assembly bracket is in turn secured to the floor by either an anchor bolt in the center bottom hole directly into the tank floor or by two height-adjustable anchors through the two outer holes to enable leveling of the diffuser to bottom of the tank for maintaining the position of an aeration element. It is contemplated that a plurality of brackets can be utilized along the length of the aeration element, rather than only on its ends.

In a further exemplary embodiment, in view of transport and assembly considerations, aeration elements having shorter lengths are contemplated. Two of these shorter aeration elements can be connected at their adjacent ends, when the aeration elements are placed adjacent one another, a connection line, such that one aeration element function as an air conduit to one or more aeration elements. With this configuration, buoyancy of the aeration elements is reduced. Shorter length modules of aeration elements can more easily be transported, handled and installed.

It is further contemplated according to the present invention that the aeration assembly comprises a plurality of aeration elements and an air control manifold assembly including at least two air distribution conduits and a conduit mounting assembly.

The air control manifold assembly includes at least two offset, stacked conduit elements arranged within a single conduit mounting assembly in order to provide a cost-effective and space-saving arrangement of the air supply conduits relative to the aeration elements. The assembly provides a high efficiency fine bubble aeration of the water to be treated, in combination with low power consumption supplemental mixing with submerged or floating mixers.

Preferably, only one lateral air supply conduit is used with the conduit mounting assembly and coupling devices according to the present invention.

The dual control lateral air manifold assembly is contemplated for use in aeration tank applications, such as class activated sludge flow through, tapered aeration zone and Sequencing Batch Reactor (SBR) designs. Further, the assembly can be used in oxidation ditch applications, including upgrades and retrofits and provide up to a 50% energy savings of mechanical mixing aerators. A further advantage relates to the energy efficient loading scalability by combining high efficiency fine bubble aeration with low energy consumption submerged mixing.

As noted above, a significant advantage associated with the dual control lateral air manifold assembly is its flexibility and scalability with regard to its applications in water treatment facilities. The present invention, as opposed to any aeration systems presently known in the art, provides the broadest BOD and hydraulic flow load range variability to address the current environmental volatility caused by extreme weather events such as drought or heavy rains, demographic, industrial product shifts, and other factors over the yours of a 15 to 25 year municipal and/or industrial waste water treatment infrastructure planning cycle.

Further specific features of the invention will be described in detail subsequently.

### Brief Description of the Drawings

This object, and other objects and advantages of the present invention, will appear more clearly from the following specification in conjunction with the accompanying schematic drawings, in which:
- Fig. 1: shows a plan view of an exemplary aeration element;
- Fig. 2: is a plan view of the aeration element with a cutaway of the outer membrane;
- Fig. 3: is a lengthwise cross-section of the aeration element of Fig. 1 with the flexible membrane disposed around it in an inflated state;
- Fig. 3A: is a lengthwise cross-section of the aeration element of Fig. 1 with the flexible membrane disposed around it in a deflated state;
- Fig. 4: is an top view of aeration element showing the retaining clamp and check valve with flexible band in place;
- Fig. 5: is a view of the connecting end of the aeration element with the flexible membrane in a cutaway view to expose the check valve band and corrugated surface of the aeration element of Fig. 1;
- Fig.6: shows a further view of the connecting end of the aeration element with the check valve band/flap cut away to expose the check valve opening;
- Fig. 6A: shows a further view of the connecting end of the aeration element with the check valve band/flap completed removed.
- Fig. 7: is a further view of the connecting end of the aeration element with the check valve band/flap and outer membrane shown cut away to expose the air supply hole connected with the threaded air port connection;
- Figs. 8 and 8A: are detail views of the bead and grip ridges formed on the support member to prevent slippage of the clamp and membrane;
- Fig. 9: is a plan view of two exemplary aeration elements connected on opposite sides of a distribution conduit;
- Figs. 9A - 9D: are cross sectional and top views of the two aeration elements of Fig. 9 showing their connection and positioning relative to the distribution conduit, as well as an arrangement of a plurality of such pairs of aeration elements along a common distribution conduit;
- Figs. 10 - 10B: are plan views illustrating various embodiments for arranging a plurality of exemplary aeration elements relative to a distribution conduit or other air supply device;
- Fig. 11: is a plan view of an exemplary aeration element positioned in a mounting assembly;
- Figs. 11A-11C: are side, top, and cross sectional view, respectively, of the mounting assembly of Fig. 11;
- Fig. 12: is a further cross sectional view of the mounting assembly of Fig. 11;
- Figs. 12A - 12B: are plan view of the mounting assembly of Fig. 11 and showing the threaded hose coupling and flexible hose connected thereto;
- Fig. 13: is a plan view of a further example of a mounting bracket assembly;
- Figs. 13A-13C: shows further details of the mounting bracket assembly of Fig. 13;
- Fig. 14 - 14B: show further plan views of the mounting bracket assembly with a threaded hose coupling;
- Figs. 15 and 15A: show perspective views of an assembly bracket according to a further example,
- Figs. 16 and 16A: show perspective views of the assembly bracket according to Figs. 15 and 15A positioned for mounting an aeration element to a support surface;
- Figs. 16B and 16C: show perspective views of a plurality of assembly brackets assemblies arranged on the length of two forms of aeration elements and attached to the support surface;
- Figs. 17 - 17B: show top, side, and end views, respectively, of the mounting bracket assembly of Figs. 15 and 15A secured to the support surface;
- Figs. 18 - 18B: show plan views of a further configuration of the aeration devices having shorter lengths and connected at adjacent ends;
- Fig. 19: shows a plan view of the opposite end of the adjacently arranged aeration elements of Figs. 18A- 18C;
- Figs. 20 - 20A: show a further example of a rounded aeration element secured within a series assembly brackets;
- Fig. 21: shows a plan view of a series of diffusers that are connectable to a main air supply and which are connected to one another along the central axis of the diffusers;
- Figs. 22 and 22A: show a plan view and an end view, respectively, of an assembly bracket with a central bore and cooperating bolt;
- Fig. 23: shows a plan view of an aeration assembly according to the present invention with the air control manifold assembly including the cooperating coupling and mounting bracket assembly;
- Fig. 24 and 24A: show view of the coupling device according to an embodiment;
- Fig. 25: shows a further embodiment of the coupling device;
- Fig. 26: shows a plan view of an aeration assembly including a plurality of dual air control assemblies for water treatment; and
- Figs. 27 and 27 A: show views of a mounting bracket assembly for use with the coupling device and dual air control assembly of an aeration assembly according to the present invention.

### Description of Preferred Embodiments

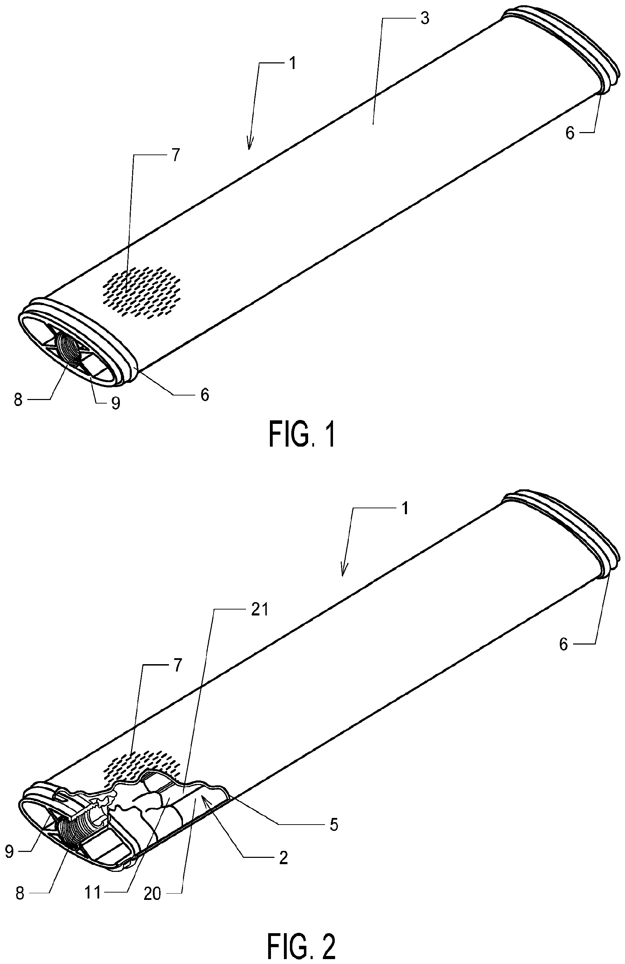

Referring now to the drawings in detail, in particular Figs. 1 and 2, the elongated, flattened diffuser aeration element 1 has an essentially flattened, rigid support element 2 with an essentially oval cross-section. As can be seen in Fig. 2, the support element 2 with the oval cross-section has a hard, rigid corrugated hollow profile 11, such that opposite surfaces 3, 4 (upper and lower surfaces, respectively as shown in Figs. 1 and 2) of the support element provided corrugated surfaces with raised portions or ridges 20 and channels or grooves 21 disposed therebeween.

A sleeve 5, or flexible membrane, is disposed about the support element 2 and secured around at least one end of the support element 2 by a clamp 6 made of stainless steel or another material, which is positioned to hold the sleeve 5 in place in an airtight manner against the support element 2. The sleeve 5 includes perforations in the form of slits 7 which are positioned only on the upper surface 3 of the support element 2 when the sleeve 5 is in place around the support element 5. The sleeve 5 preferably is made of a material such as EPDM, silicone, polyurethane, polymeric thermoset, and thermoplastic elastomers.

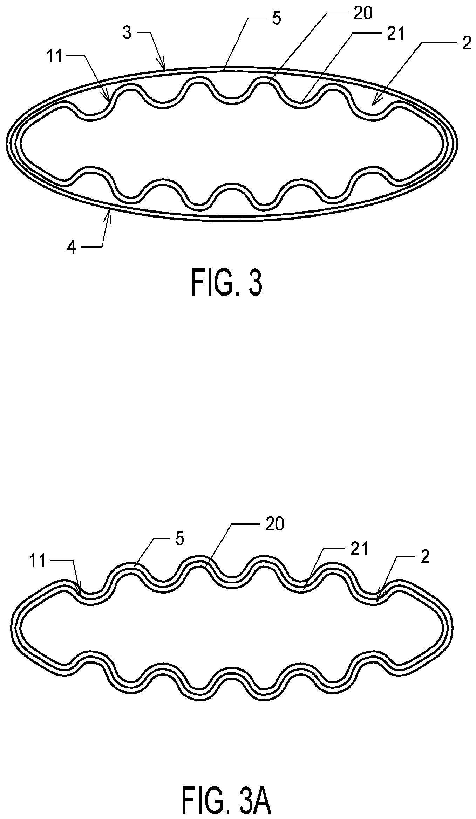

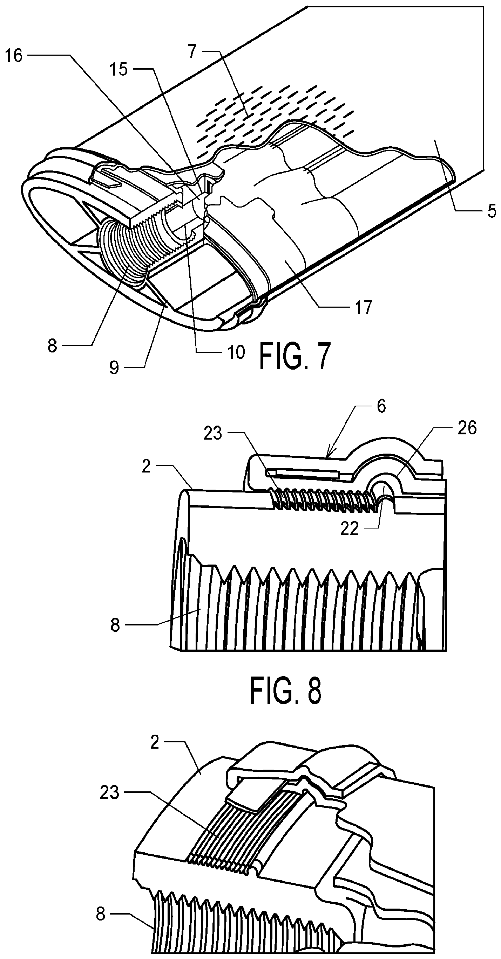

The aeration element 1 further includes a threaded air port connection 8 for attachment to an air supply with a cooperating fitting, such as an air distribution conduit, as will be described below. Radial ribs 9 extend outwardly from the connection 9 to define opening channels and structural support for the open end of the support element 2. As shown in Fig. 7, the threaded air port connection 8 is connected to an air supply hole 10 in the support element 2, through which air supplied into the aeration element 1 flows into the support element 2. As shown in Figs. 3 and 3A, the air supply flows between the corrugated profile 11 and the sleeve 5, causing the sleeve 5 to inflate; the air is released from the sleeve 5 into the surrounding liquid via the slits 7 formed in the sleeve 5 on the top or upper surface of the support element 2.

Fig. 3A shows the sleeve 5 in a deflated or collapsed state, in which the sleeve 5 falls onto the corrugated profile 11; this allows for a controlled radius or folding of the sleeve 5. Further, the ridges 20 and grooves 21 prevent the sleeve 5 from forming creases in the de-pressurized state thereby extending the life expectancy of the unit. During operation, the center or interior of the support element 2 is filled with water and/or sludge when the aeration element 1 is submerged.

It is further contemplated that the one end of a first diffuser can be closed off with an optional threaded port to supply a second diffuser with air, using the first diffuser as an air conduit. The diffuser is still fully buoyant. In other words, the second diffuser need not be connected with the main air supply, but only to the first diffuser.

The structure of the aeration element 1 provides for a reduced buoyancy of the aeration element in this submerged state. When the sleeve 5 is inflated, it expands to a cylindrical form such that corrugated profile (i.e., the ridges 20 and grooves 21) may not be evident. It has been found, surprisingly, that the invention works best when the inside circumference of sleeve 5 is equal to the outside circumference of the surface of support element 2, whether the sleeve 5 is in its inflated or non-inflated state.

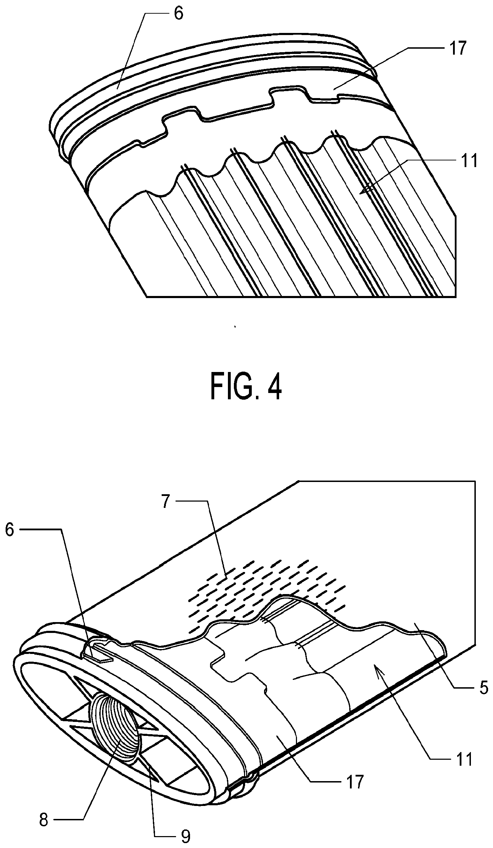

As shown in Fig. 4, the support element 2 includes profiled transitions or stepping 14 such that the inner diameter circumference of the sleeve 5 is equivalent to the outer diameter circumference of the corrugated profile 11 of the support element 2.

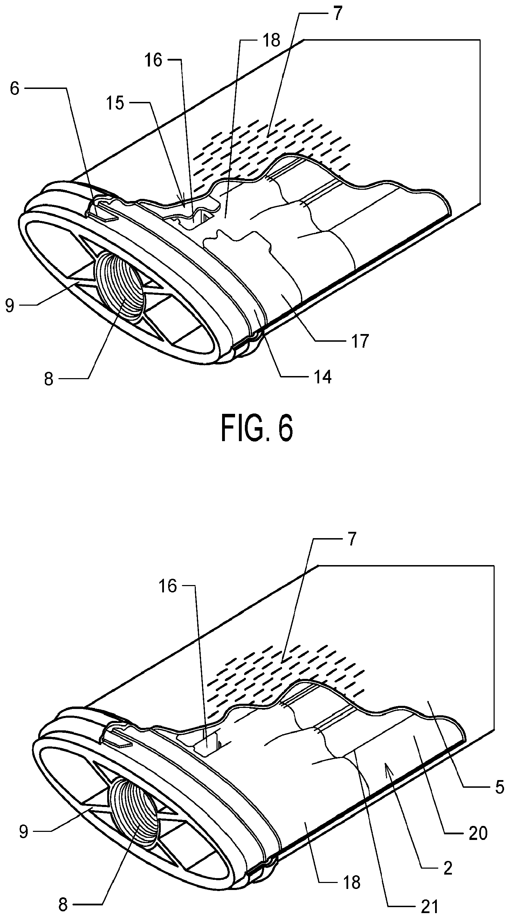

Fig. 5 shows the aeration element 1 with the outer sleeve 5 cut away to reveal the support element 2 and its corrugated profile 11. The aeration element 1, in a preferred example, i includes a check or backflow valve assembly 15. The check valve assembly 15 includes an opening 16 and flexible, elastomeric band 17 positioned around the support element 2 to cover the opening 16 during operation of the aeration element 1. The band 17 preferably includes cut-out portions to assist in distribution air flow into the interior of the support element 2. The band or flap 17 is positioned to cover the opening 16 to prevent the debris from entering the interior of the aeration element 1 and impairing its operation, if a backflow of sludge or other debris should occur when the membrane sleeve 5 is breached or cut by external impact of debris floating in the sludge, or when the sleeve 5 is damaged externally during installation or servicing of the aeration system. To accommodate the band 17 and retain a uniform outer circumference of the support element 2, a portion of the material of the support 2 is removed from the support element 2 to form a recessed area 18 for the band 17, as can be seen from Figs. 6 and 6A.

Figs. 6 and 6A show further details of the check or backflow valve assembly 16. In Fig. 6, the band 17 is shown partially cut away to expose the opening 16, while Fig. 6A shows the band 17 completely removed.

Fig. 8 shows a detail of the clamp 6, which is made of stainless steel or another material, and which is positioned near the ends of the aeration element 1 to hold the sleeve 5 in place. Preferably, the support element 2 is provided with a bead 22 that cooperates with a recess 26 on the clamp 6 to prevent the clamp 6 from slipping and to keep the sleeve 5 under an axial and longitudinal tension, thereby preventing the sleeve 5 from slipping off the support element 2. Further, the support element 2 can be provided with grips or grooves 23 to improve the air seal function of the clamp 6, which further compresses the sleeve 5 onto the support element 2 (see also Fig. 8A).

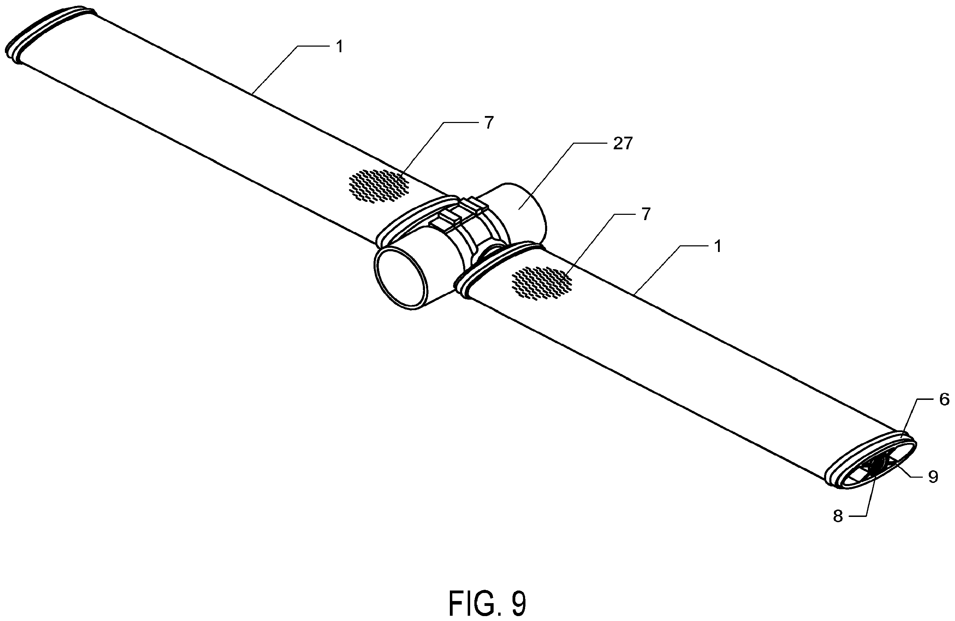

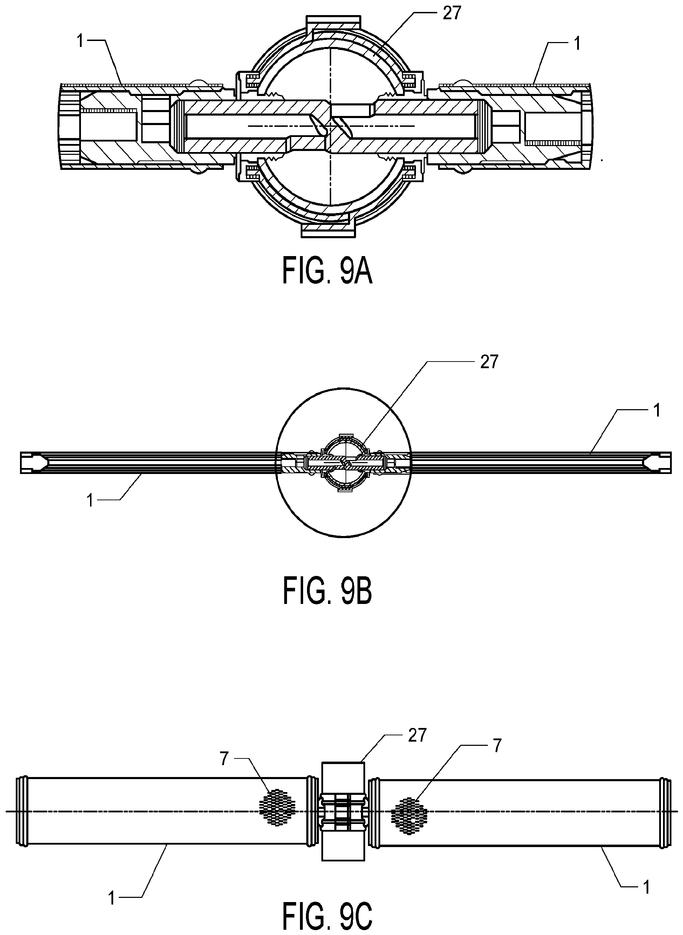

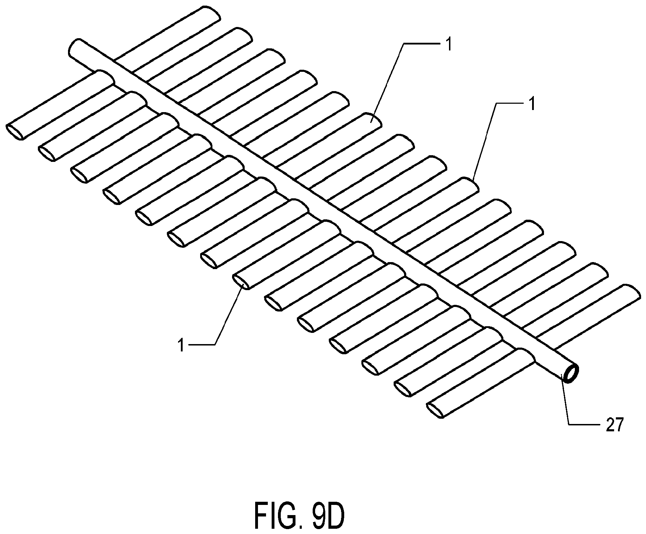

Fig. 9 shows two aeration elements 1 connected via the thread air port connection 8 to an air supply, shown here as distribution conduit 27. The air port connection 8 is configured to cooperate with a fitting to form a sealed connection to the distribution conduit 27, for example, a fitting like that disclosed in U.S. Patent No. 7,497,421 to the same inventor. The aeration elements 1 extend perpendicular to the distribution conduit 27. The distribution conduit 27 can be equipped with a plurality of such pairs of aeration elements 1. The support element 2 is open at its ends, so that the water or other liquid that surround the aeration element has access to the interior of the support element 2. Sleeve 5, as discussed above is an elastic material, especially rubber or a rubber-like polymeric material that stretches around the surface of the flattened support element 2. When sleeve 5 is not inflated, hence when aeration is not occurring, sleeve 5 deforms to the curvatures of the surface of the flattened support element 2, but the corrugated, outside surface of support element 2 prevents crease formation in sleeve 5.

As a consequence of the above manner of construction, during operation only a small portion of the support element 2 is filled with air, and the buoyancy of the aeration element is therefore low, which is of particular advantage for very long aeration elements 1. The length of the aeration element 1 can be varied according to the application, that is, the size and volume of the area being aerated. With very long aeration elements, mounting assemblies may be utilized to fix the aeration elements to a bottom surface of the tank, pool, or other container to prevent vertical and lateral movement or buckling of the aeration elements 2 in the liquid.

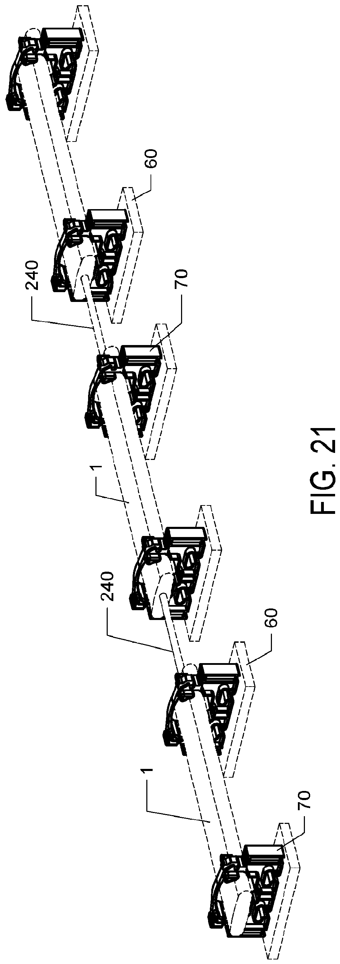

As noted above, and as shown in Fig. 21, one end of a first aeration element can be closed off with an optional threaded port to supply a second diffuser with air, using the first diffuser as an air conduit. The aeration elements can then be connected in series as shown in Fig. 21.

Figs. 9A and 9B illustrate two aeration elements 2 connected to a distribution conduit 27 in cross sectional view, while Fig. 9C shows a top view of the aeration element 2 connected to the distribution conduit 27. While Figs. 9A and 9B show two aeration elements 2, it is to be understood that any number of aeration elements (i.e., more than one) can be utilized. As can be seen in Figs. 9 and 9C, the slits 7 are evenly distributed over the entire top surface 3 of the sleeve 5, although the figures show slits 7 positioned only on a portion of the top surface 3 of the sleeve 5. Air fed into the air port connection 8 can flow through the air supply hole 10 and escapes through the slits 7 as fine bubbles into the surrounding water or liquid.

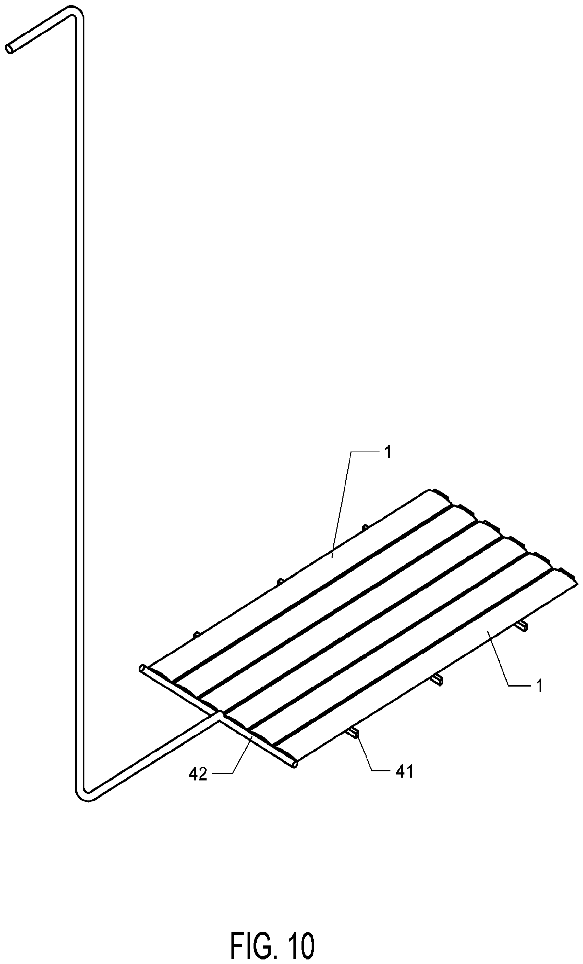

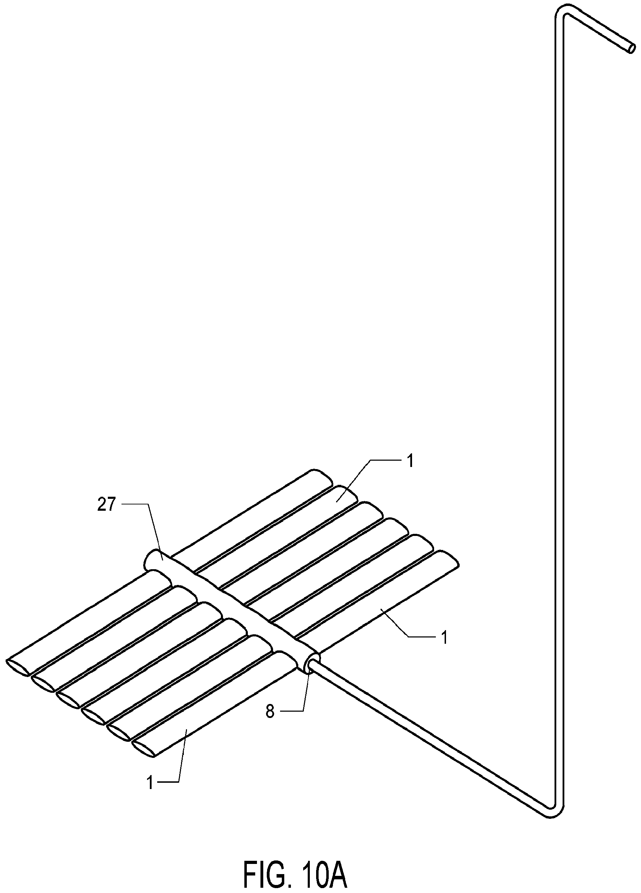

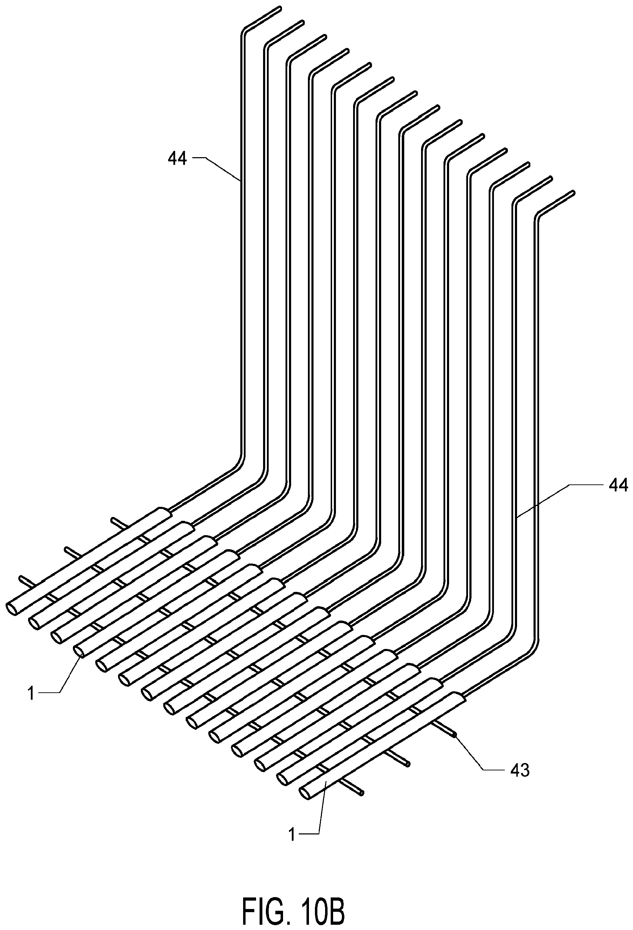

Fig. 9D shows a plurality of aeration elements 1 connected in the paired relationship of Fig. 9 along a common distribution channel 27. The aeration elements 1 can be spaced from one another, as shown in Fig. 9D, or arranged to be adjacent to one anther, as shown for example in Fig. 10.

Preferably, the connection of the aeration element 1 to an air distribution conduit 27 or other air supply or manifold is affected by connecting a cooperating, threaded fitting to form a sealed connection between the air port connection 8 and the air distribution manner by a fitting arrangement shown by way of example in Figs. 9A through 9C.

Figs. 10 through 10D show a variety of contemplated configurations for arranging a plurality of the aeration elements 1 depending on the volume of liquid to be aerated and the other parameters of the specific application. As shown in Fig. 10, the aeration elements 1 can be arranged side to side on a base frame 41 or support structure and supplied with air via a common conduit 42 that, in turn, is supplied with air via a supply tube, pipe or hose.

Fig. 10A shows another, possible configuration of the aeration elements 1, again, arranged side-by-side but connected to a distribution conduit 27 as shown in Fig. 9.

Fig. 10B shows a further configuration for the aeration elements 1, in which the elements 1 are arranged in a spaced relation on a framework or tracks 43, and with each aeration element having an individual air supply 44.

Due to the elongated nature of the aeration element 1 and in particular, when the application requires extremely long aeration elements 1, a mounting assembly may be provided to secure the aeration element(s) to a bottom surface of the container, pool, pond, etc. containing the water to be aerated. As noted above, the mounting device or bracket prevents vertical or lateral movement of the aeration element(s) 1 during use.

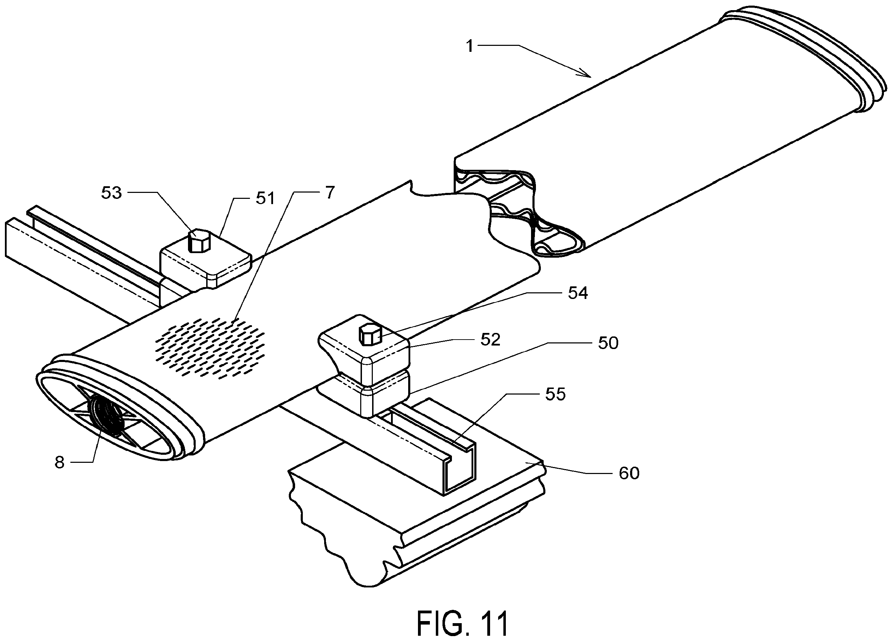

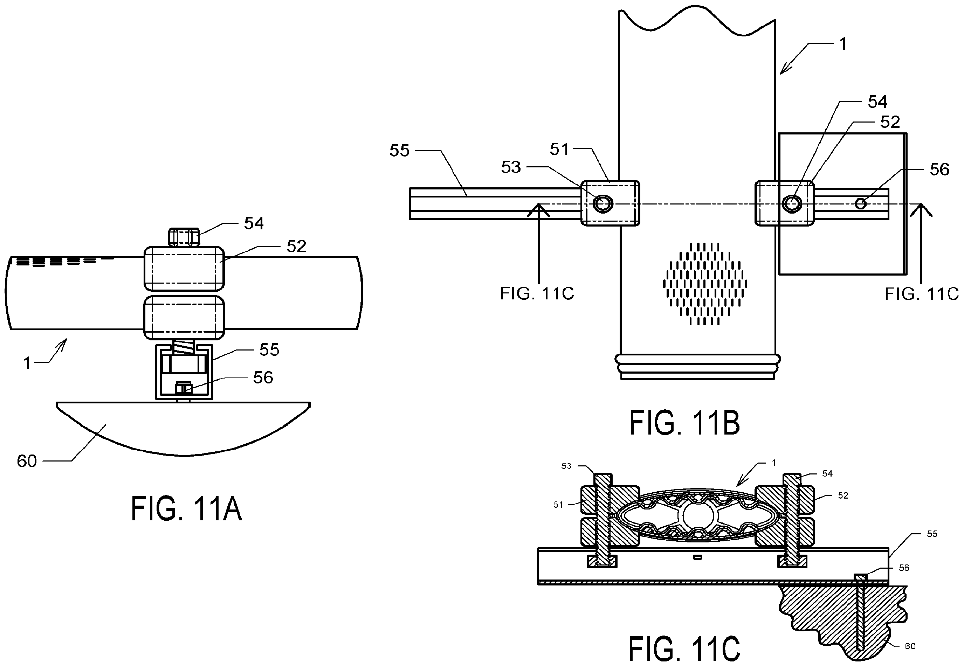

Fig. 11 shows an example of a mounting assembly 50 for securing the aeration element 1 to the floor or bottom of the container or body of water to be aerated. The mounting assembly 50 includes flanges 51, 52 and respective cooperating bolts 53, 54 that received in a cooperating groove of a profiled bar 55. The aeration element 1 is positioned and clamped between the flanges 51, 52, and the profiled bar 55, in turn is attached via a pin or bolt 56 to the bottom surface 60 or floor of the container/body of water to be aerated.

Fig. 11A shows a side view of the mounting assembly 50, profiled bar 55, and securing bolt and nut assembly 56. Fig. 11B shows a top view of the mounting assembly 50 and aeration element 50, and Fig. 11C shows a cross sectional view mounting assembly 50 in place to hold the aeration element 1 in position as described above. Again, depending on the length of the aeration element(s) 1 and/or depth at which the aeration elements 1 are position, according to the specific application, one or more of such mounting assemblies 50 may be utilized to stabilize and secure the aeration elements 1.

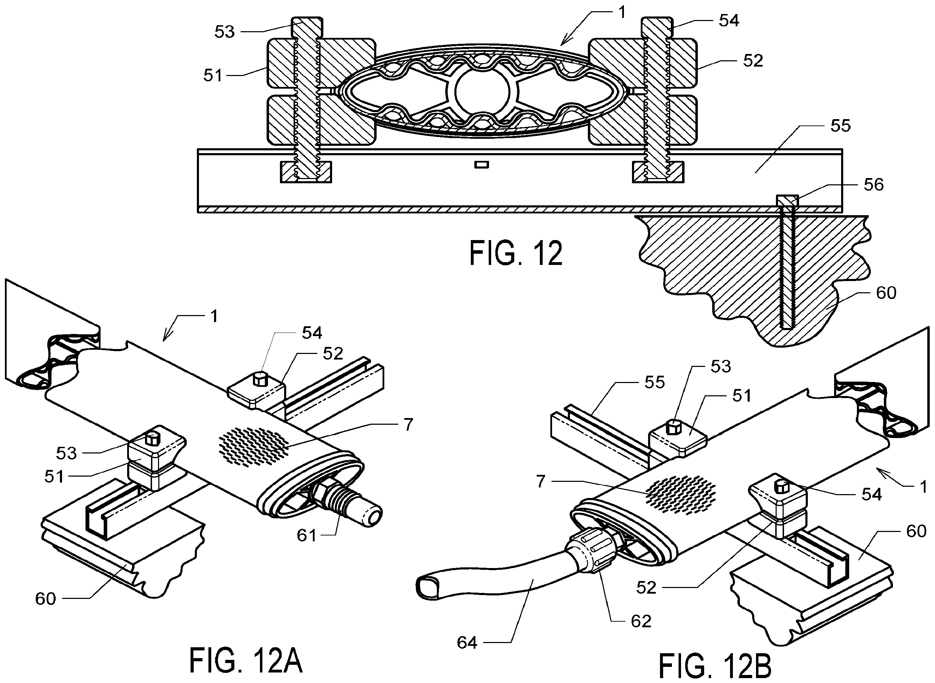

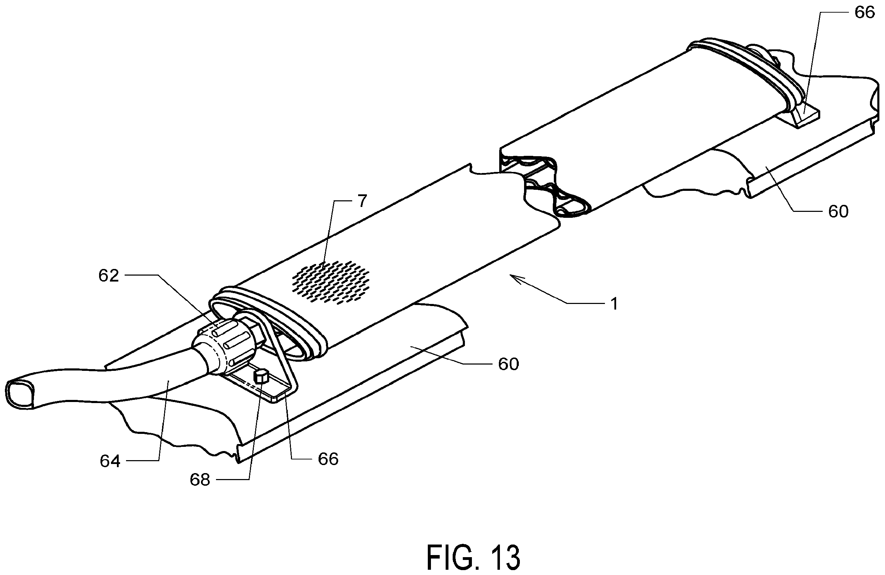

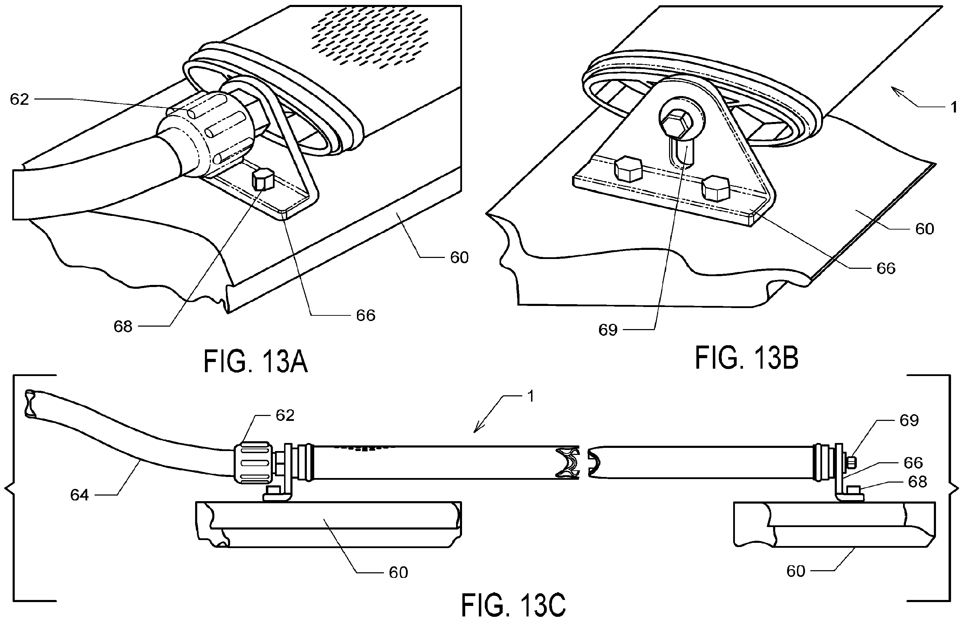

Figs. 12, 12A and 12B show the mounting bracket assembly of Fig. 11. In this embodiment, a first type of coupling for connecting the aerator element 1 to an air supply is shown by way of example. A threaded adapter or coupling 61 for connecting any type of material hose using a band clamp is utilized in a commonly known manner, with the coupling 61 being received in the air port connection 8. Figs. 13, 13A, 13B, and 13C show an embodiment of an adjustable mounting bracket 66 for securing one or both ends of the aeration element to the bottom or floor 60 of the tank containing the liquid to be aerated. The adjustable mounting bracket 66 can be cemented and secured by bolts 68 onto a concrete floor, for example. The bracket 66 includes a recess for accommodating a further bolt 69 that enables the height/position of the bracket 66 to be adjustable in order to level the aerator element 1. Fig. 13A shows a threaded hose coupling 62 as a second type of coupling that can be used to connect the aerator element 1 to an air supply, along with a flexible hose 64 that is connected to a cooperating threaded coupling received in the air port connection 9. Fig. 13B shows the end of the aeration element 1 (opposite the end of the aeration element 1 to which the hose 64 is connectable), likewise secured by the mounting bracket 66 to a bottom or floor 60 of the tank.

Fig. 13C shows a side view of the aeration element 1 with mounting brackets 66 securing it to the floor 60 at opposite ends and with a threaded hose coupling 62 and flexible hose 64 attached.

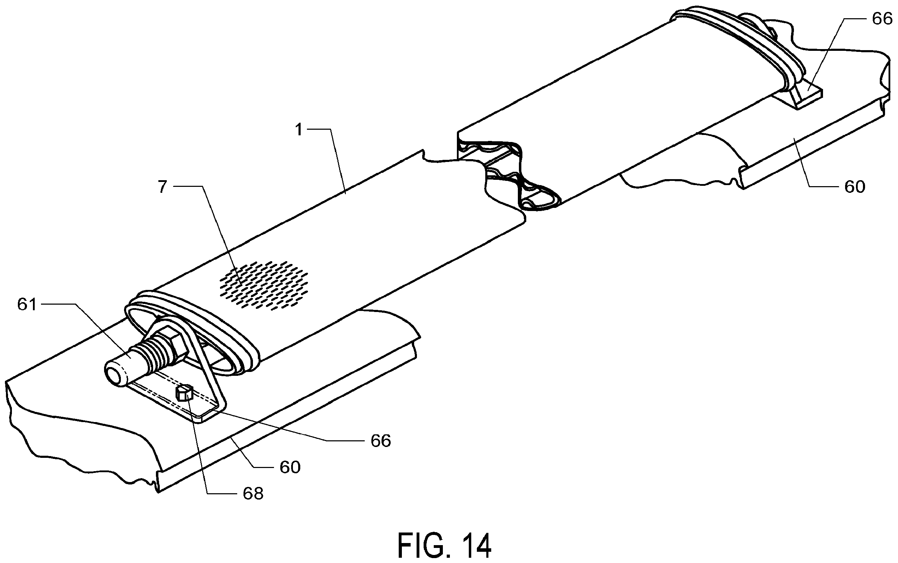

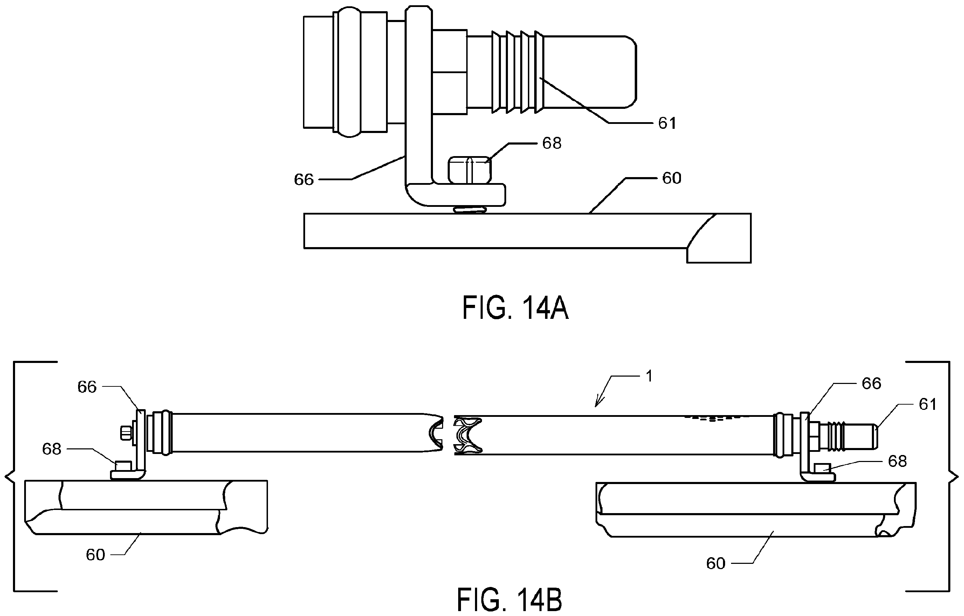

Figs. 14 and 14A show the adjustable mounting bracket 66 again securing opposite ends of the aeration element 1 to the floor or bottom 60 of a tank, but illustrates also the threaded adapter or connection 61 provided to receive a threaded hose coupling 62 and flexible hose 64 for supply air to the device.

The above-described features of the exemplary aeration element 1 provide for an improved and stable distribution of air bubbles to the liquid to be aerated at a low air flow rate, thus enhancing energy efficiency.

Further, the structure of the aeration element as an essentially flattened element with an oval cross section provides a greater surface area efficiency than known aeration devices that utilized round or tubular aeration elements, as discussed above. Further, the corrugated profile of the support element in conjunction with the flexible sleeve provides increased longevity of the sleeve, preventing folds and creases in the sleeve that lead to fatigue and/or tearing of the elastomeric sleeve material, which can cause operating failure and damage to the aerating assembly.

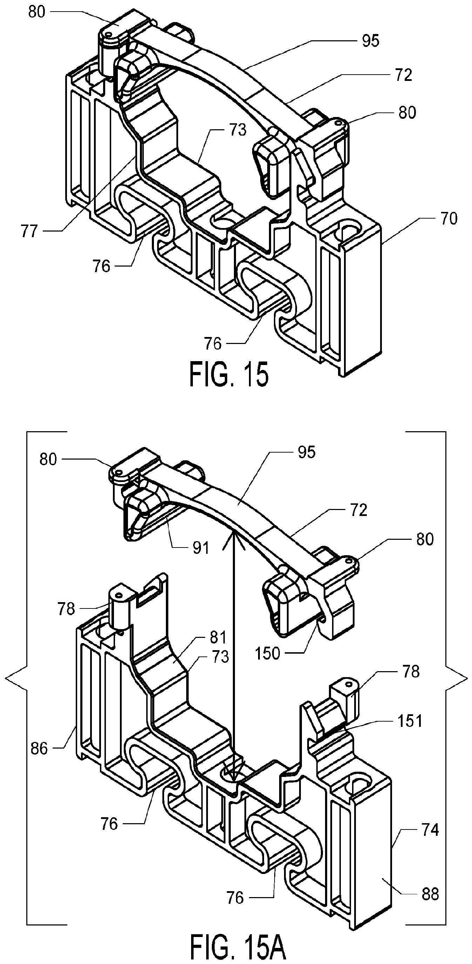

Figs. 15 and 15A show a preferred example of an assembly bracket 70 for securing the aeration element 1 to a support surface, such as the floor or bottom of a pool or tank. The assembly bracket 70 includes an upper profiled portion 72 and a lower profiled portion 74. The lower profiled portion 74 is an injection molded or machined part, preferably made of Polypropylene [PP], Polyamide PA, PVC or other hard thermoplastics , which includes a base portion 77, having a generally U-shaped, cut-out section 73 for accommodating an aeration element positioned therein. The lower profiled portion 74 of the assembly bracket 70 is formed to include through-going cut-out portions or passages 76 that extend through the cross sectional width of the assembly bracket 70 to facilitate water circulation when the brackets are in place on the floor or bottom of the tank or pool. The lower profiled portion 74 has lateral connecting flanges 78 positioned at the upper ends or legs of the U-shaped cut-out section 73, which are formed to cooperate with corresponding connecting flanges 80 provided on the upper profiled portion 72. Each of the upper profiled portion 72 and lower profiled portion 74 includes a respective shoulder 91, 81, respectively, which provide the only contact area for the diffuser element 1 when the assembly bracket 70 is in place.

The upper profiled portion 72 of the assembly bracket 70 includes an elongated, generally arched portion 95 extending between the connecting flanges 80. When the upper profiled portion 72 and the lower profiled portion 74 are secured together, the arched portion 95 extends over and above (but does not contact) a top surface 112 of the aeration element positioned within the assembly bracket 70, while the U-shaped portion of the lower profiled portion 74 extends below (but does not contact) the bottom surface 110 of the aeration element.

The aeration element only contacts the shoulder areas 81, 91 of the upper profiled portion 72 and lower profiled portion 74, respectively, as described above. The membrane purposely shall not make contact in other areas to prevent rubbing, pinching of the membrane sleeve, thus prolonging its useful life. The positioning of the assembly bracket 70 about the aeration element 1 in the manner described provides for a loose fit so membrane can flow around the shoulder area in the depressurized state.

The upper profiled portion 72 is formed to correspondingly fit onto to the lower profiled portion 74 at the respective connecting flanges 80, 78. More specifically, the upper profiled portion 72 of the assembly bracket 70 connects to the lower profiled portion 74 of the assembly bracket 70 by means of a snap-in, cooperating recess 150 and undercut 151, best shown in Fig. 15A.

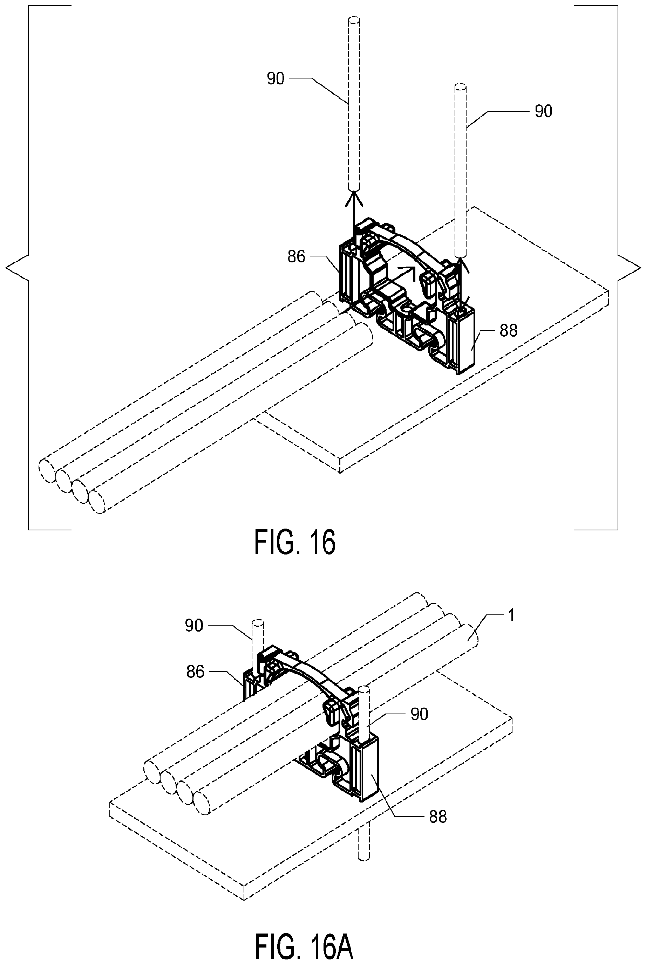

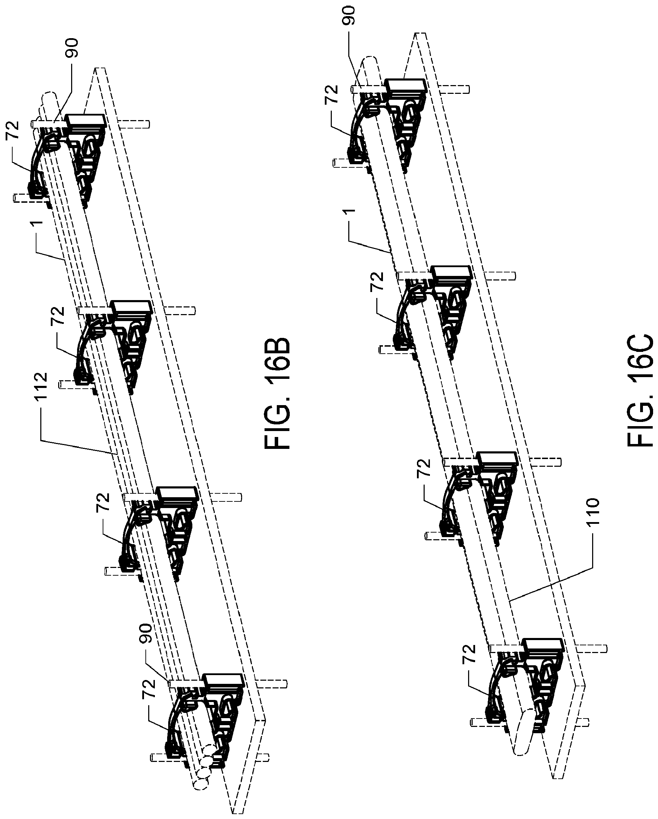

As best shown in Figs. 16 and 16A, the lower profiled portion 74 further includes attachment portions 86, 88 for receiving fixing rods 90 therefore and for securing the assembly bracket 70 to the floor or bottom of the pool or tank. Figs. 16A and 16B further show the assembly bracket 70 secured around an aeration element for holding the aeration element 1 in place during use in a tank or pool.

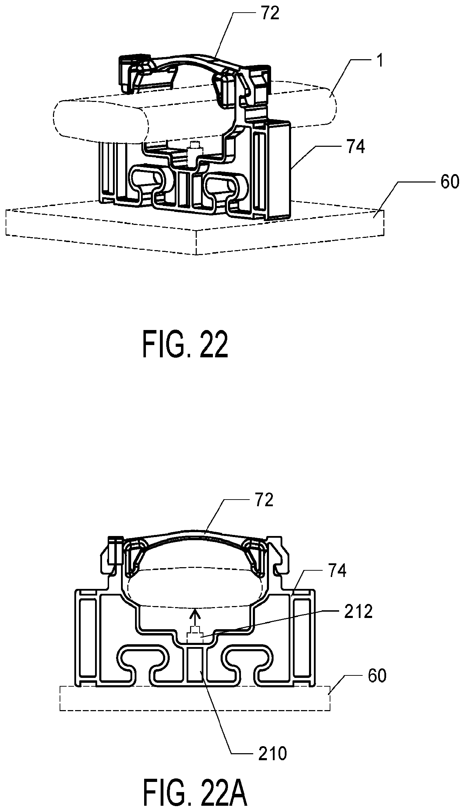

In the alternative, as best shown in Figs. 22 and 22A, the lower profiled portion 74 may include a centrally located bore or hole 160, through which a bolt 162 extends into the floor or other supporting surface for the aeration elements.

Figs. 16B and 16C show how a plurality of assembly brackets 70 can be utilized along the length of an elongated aeration element 1 or plurality of elements 1 to stably secure the aeration element(s) and reduce buoyancy when the aeration elements are positioned for use underwater, generally at the bottom of a holding tank or pool. As described above, the aeration element 1 can be configured at lengths of up to 4 meters or more to accommodate applications in larger tanks or pools. As such, a corresponding number of assembly brackets 70 can be positioned along the length of such an elongated aeration element 1 in order to provide the most effective stability and reduction of buoyancy for the specific application.

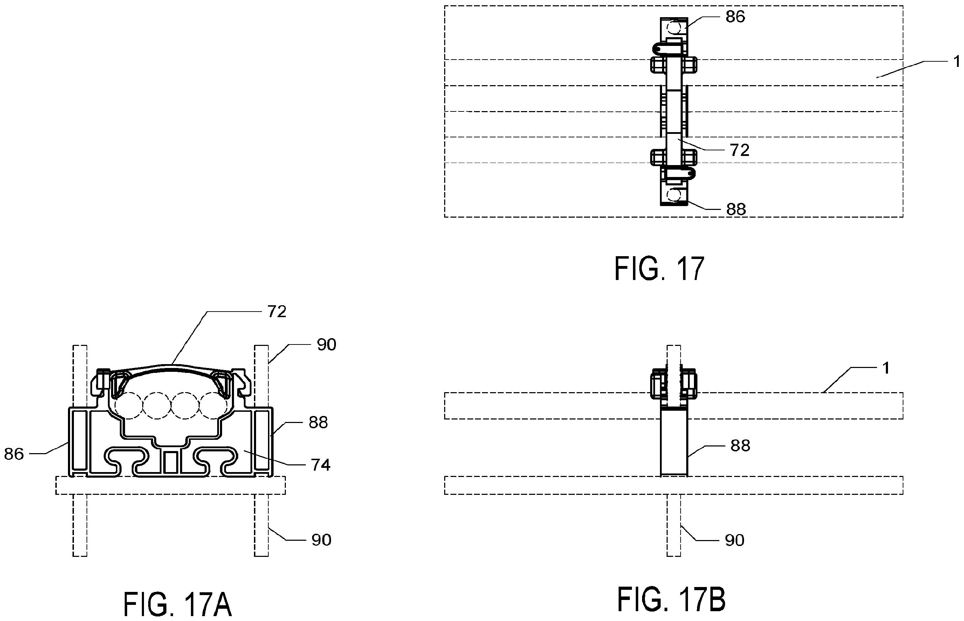

Figs. 17 and 17A show a top view and side view, respectively, of an aeration element 1 position in an assembly bracket 70 in place on the floor or bottom 71 of a tank or pool. Fig. 17A provides an end view of an assembly bracket 70 positioned about an aeration element 1 and secured to the floor or bottom 71of the tank or pool. Fig. 17A most clearly shows the generally through-going portions or passages 76 that extend through the lower portion 74, which permit water in the tank to circulate and flow through and around the assembly bracket 70.

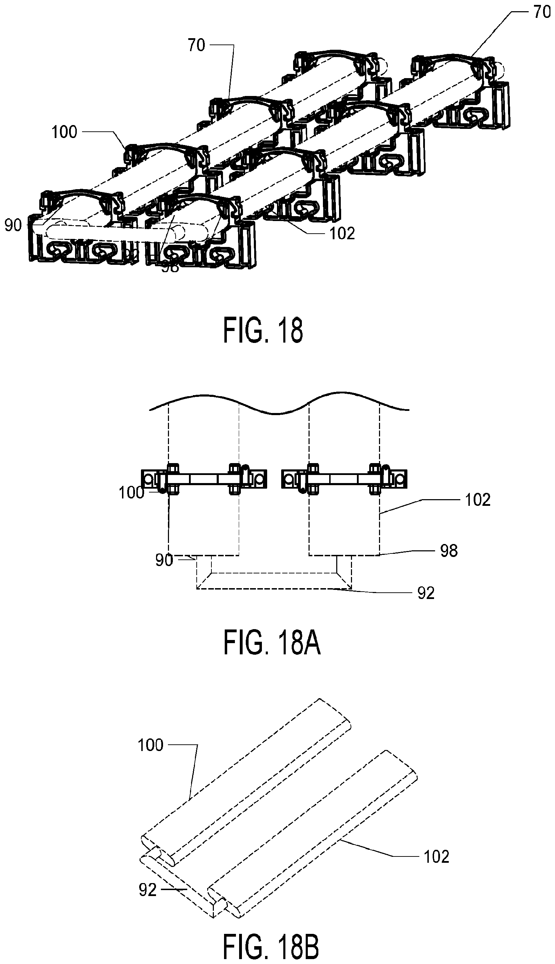

In a further example, it is contemplated that the above-described aeration element 1 can be configured in shorter lengths, as best shown in Figs. 18 through 19, to facilitate transporting, storage and placement of the aeration elements. Since larger and/or deeper pools or tanks of water could require very elongated aeration elements that are unwieldy to install and difficult to transport, it was found that aeration elements 100, 102 of substantially shorter lengths, for example, 1 to 3 meters, can be positioned adjacently or in series or rows along the center axis of the aeration elements in one or more assembly brackets 70 described above. Adjacent ends 90, 98 of the aeration elements 100, 102 are then connected via a suitable connection 92, for example, a hose clamp connection. In a preferred example, each aeration element one to two meters in length for packaging and shipping compactness. Up to two aeration elements 100, 102 can be connected by a 1" (2,54 cm) hose clamp connection, for example, to form a four meter aeration element per each hose connection to the lateral air supply pipe. A two meter section of an aeration element requires two assembly bracket connections, preferably spaced 1 meter apart, and clamps anchored directly in the basin, tank or pool floor 200 with a single bolt, if the basin floor is level, or can be positioned with two threaded rods per assembly bracket in order to level the aeration elements on an uneven basin floor.

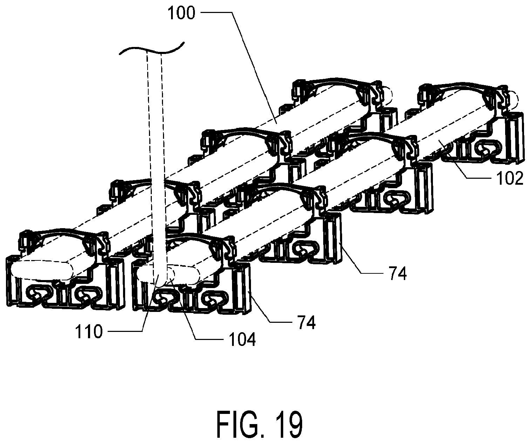

As best shown in Fig. 19, in one exemplary embodiment, a hose clamp 104, preferably a 1" (2,54 cm) hose clamp, is connected to a male connection (preferably, 1" NPT) (2,54 cm) in order to connect at least one of the two aeration elements, here 102, to a lateral pipe 110 at an end of the aeration elements 100, 102 that is opposite to the adjacent ends 90, 92 of the aeration elements 100, 102. Preferably, schedule 40 to schedule 80 PVC, lateral pipes (3" (7,62 cm) up (30,48 cm) in diameter) also round or square stainless steel (306 or 316) lateral pipes, are used and connected by using a 1" (2,54 cm) HDPTE, braided vinyl (PVC), or braided EPDM pipe or hose and stainless steel crimp hose clamps, although any type of other suitable hose-type fitting or coupling also is contemplated. The same connector hose clamp coupling is used to connect two aeration elements 100, 102 in order to extend the length of the aeration element from a 2 meter length to a 4 meter length per lateral connection.

With this configuration, the first aeration element 100 acts as an air conduit to the second aeration element 102. The reduced length of the aeration elements 100, 102 reduces potential buoyancy by flooding the center between the elements 100, 102, and indeed, the configuration of the shorter aeration elements connected as described, provides a greater tolerance for the entire assembly for greater buoyancy conditions.

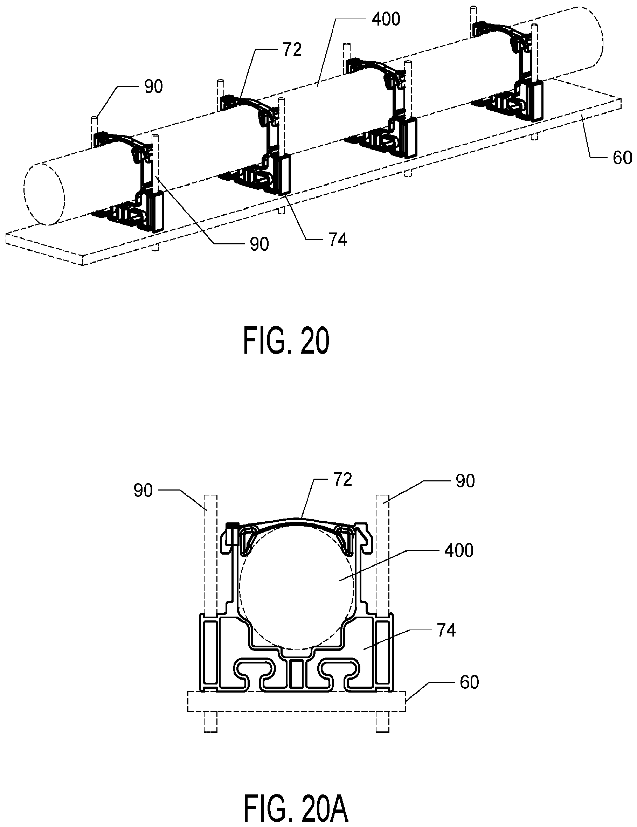

As shown in Figs. 20 and 20A, the assembly bracket 70 according to the present invention also can be used with other shapes and types of aeration elements, such as the rounded configuration, or pipe-type element 400.

As discussed above and as illustrated in Fig. 21, rather than configuring the aeration element 1 has an elongated, single unit, as described above, a plurality of aeration elements 1 can be assembled in series, using cooperating connection ports (not shown in detail again in Fig. 21) and connecting hoses or tubes 240, to facilitate transport, storage, and placement of the aeration elements 1. The assembly brackets 70 can be spaced at regular intervals along the series of aeration elements 1 to provide adequate support and buoyancy for the series. Although not shown in Fig. 21, the aeration element positioned at an end of the series is then connectable to a main air supply, the individual aeration elements serve as a conduit for the air flow to the next aeration element in the series. This configuration with the series of aeration elements 1 connected end-to-end, in addition to offering the above advantages with regard to transport and storage, also offers flexibility in applications of use to more readily accommodate containers and tanks of various sizes; when the series of aeration element are used in conjunction with the assembly brackets 70, as shown, additional benefits with regard to buoyancy and flexibility in the water tank are also gained.

As noted above, as shown in Figs. 22 and 22A, rather than using the two attachment portions 88 with cooperating pins/screws 90 shown in Figs. 16 and 16A, a single, central hole or bore 210 can be provided in the lower profiled portion 74 to secure the lower profiled portion 74, as well as the entire assembly bracket 70, to the floor 60 of the tank or container.

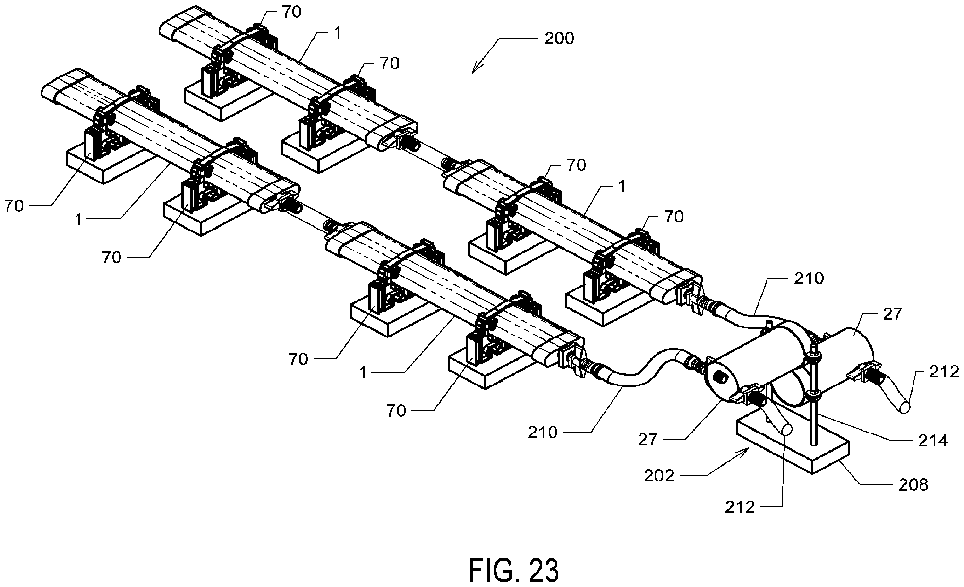

Fig. 23 shows a plan view of a dual control lateral air manifold assembly 200 of an aeration assembly according to the present invention. The structure of the aeration elements 1 is the same as that of the aeration element shown and described above with reference to Figs. 1-22A. Likewise, the assembly brackets 70 described above can be utilized with the dual air control aeration assembly 200 in the manner described above; it is contemplated, of course, that other types of mounting assemblies could be used to secure the aeration elements 1 to a support surface.

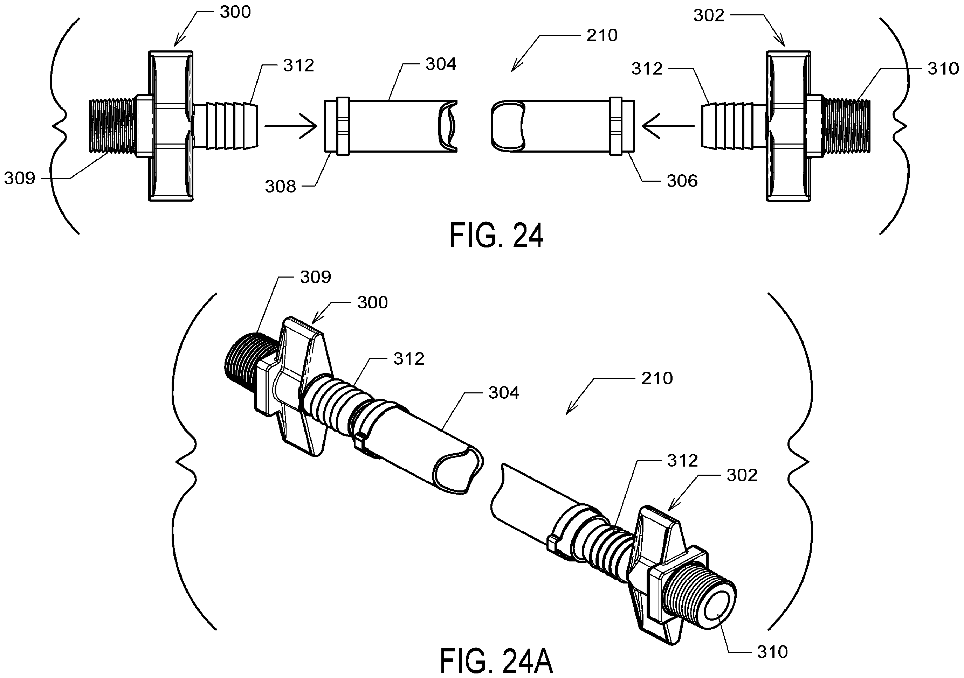

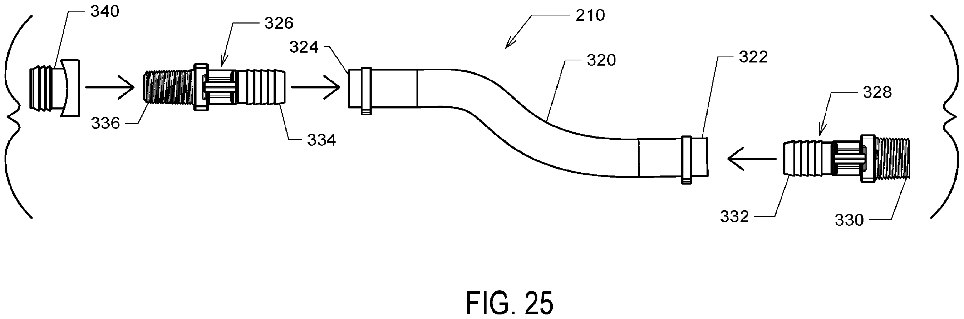

As shown in Fig. 23, the dual control lateral air manifold assembly 200 of the aeration assembly according to the present invention includes a plurality of aeration elements 1 connected, by way of example, in an end-to-end relationship as described above with reference to Fig. 21. Each of the aeration elements 1 is connected to an air distribution conduit 27 via a coupling device 210, which will be described in greater detail below with reference to Figs. 24 and 25.

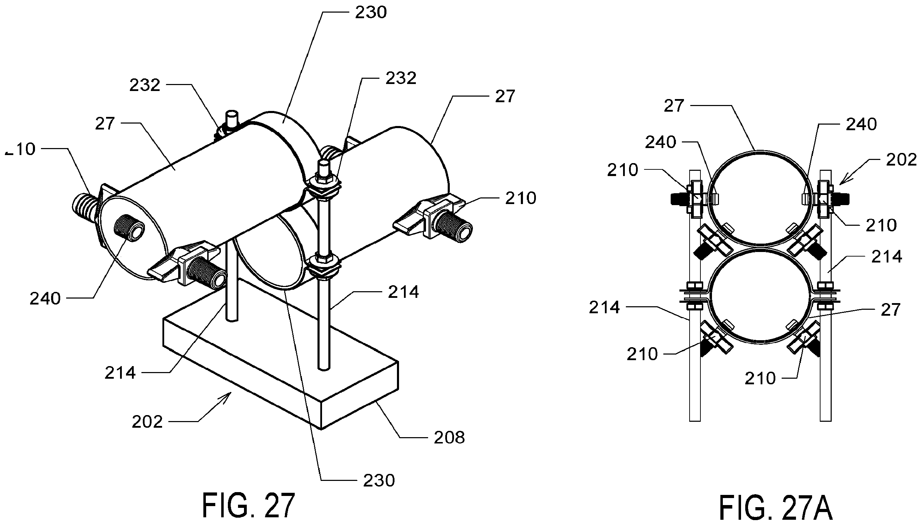

As shown in Figs. 23, 27, and 27A, the assembly 200 further includes a dual conduit mounting assembly 202, which has a base 212 for securing the mounting assembly 202 to a support surface (such as a floor or base of a water treatment tank or pond); two substantially parallel securing rods 214; and respective mounting clamp assemblies 230 for securing each of the distribution conduits 27 to the securing rods 214 via adjustable nut and bolt assemblies 232 disposed in spaced relation on each of the securing rods 214.

Each distribution conduit 27 is provided with at least one through opening or port 240, arranged at predetermined positions about the circumference of the conduit 27. The through openings or ports 240 can be placed at selected positions, such as "9:00", "3:00", "6:00" about the circumference of the air conduit 27 to allow connection of multiple coupling devices 210 and aeration elements to the conduit 27, depending on the intended application and the selected configuration of the aeration elements in the water treatment system.

Thus, the coupling device 210 and conduit mounting assembly 202 provide a system with improved flexibility and scalability to accommodate a variety of configurations without the necessity of additional and separately mounted conduits. As shown in Fig. 23, two air conduits 27 are mounted and fixed in the conduit mounting assembly 202 in an offset, stacked relationship, which provides space saving advantage as well as improved energy savings over mechanically mixing aerators.

As noted above, each of the through openings or ports 240 is configured to receive a threaded end of a coupling device 210. As best shown in Figs. 24, 24A, the coupling device 210 includes an elongated pipe or tube portion 304 having oppositely disposed first and second ends 306, 308, each of the first and second ends 306, 308 having an inner threaded region. The coupling device 210 further includes locking flanges 300, 302, each of the locking flanges 300, 302 have first and second threaded extensions 309, 312 and 310, 312, respectively. Threaded extension 310 is configured to be received into a receiving opening 240 of the air conduit 27, and threaded extensions 312 are configured to be received into the first and second ends 306, 308 of the elongated pipe portion 304 as shown in Figs. 24 and 24A. Threaded extension 309 is configured to be received in a cooperating opening (not shown) in the end of the aeration element 1. The length of the elongated pipe or tube portion 304 may be selected as desired to accommodate the application. Fig. 24A shows the coupling assembly in an assembled state before attachment to the aeration element 1.

As shown in Fig. 25, the coupling device 210 may be configured to have a bent or curved elongated tube portion 320, rather than a straight or linear configuration as shown in Figs. 24 and 24A. The bent or curved elongated tube portion 320 has opposite ends 322, 324, which are configured to receive cooperating ends of adapter elements 328, 326, respectively. Specifically, adapter 328 includes a threaded end portion 332 for engagement with the tube portion 320 and threaded end portion 330 for engagement with the air conduit 27, while adapter 326 include a threaded portion 334 for engagement with end 342 of the tube portion 320 and threaded portion 336 for engagement with a further adapter 340 that serves to connection to the aeration element 1.

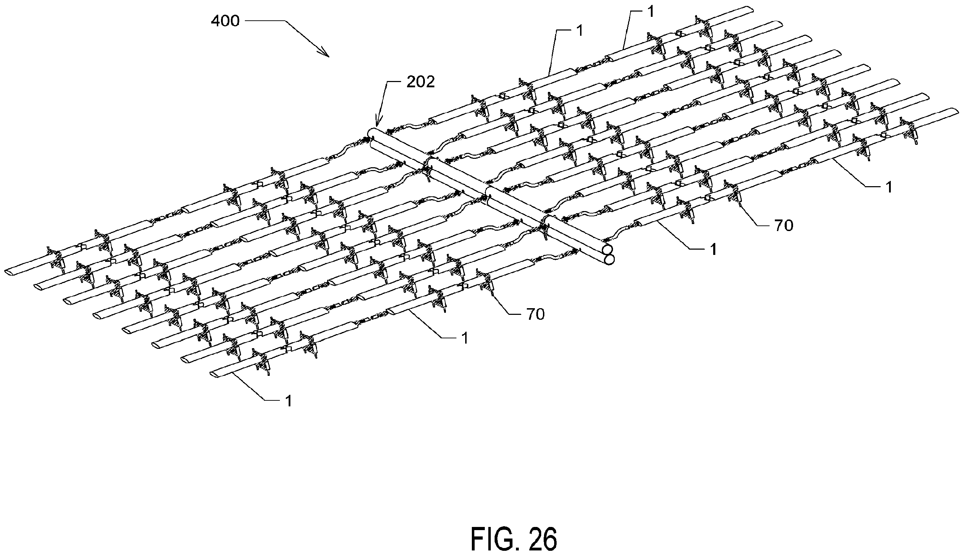

Fig. 26 illustrates one possible configuration of a section of an aeration assembly 400, which includes a plurality of aeration elements 1 arranged end-to-end and the dual control lateral air manifold assembly.

It is further contemplated that up to three air supply conduits could be stacked on top of each other to address loading range, control options and/or redundancy concerns.

Various other configurations of the aeration assembly 400 are also contemplated. For example, the sections of the aeration assembly can be arranged in zones, such that the aeration elements 1 are arranged more densely in Zone 1, spaced further apart in Zone 2 than in Zone 1, and spaced even further apart in Zone 3, relative to Zones 1 and 2. In this manner, a more efficient arrangement of the aeration elements 1 is enabled and permits a progressive treatment of the water from Zone 1 through Zone 3 to facilitate optimal waste/sludge removal.

The present invention is, of course, in no way restricted to the specific disclosure of the specification and drawings, but also encompasses any modifications within the scope of the appended claims.

## Claims

1. An aeration assembly (400), comprising:
a plurality of aeration elements (1, 100, 102); and
an air control manifold assembly (200) including:
at least two air distribution conduits (27) for supplying air to said plurality of aeration elements (1, 100, 102), wherein each of said at least two air distribution conduits (27) includes at least one port (240) disposed at selected position about a circumference of said at least two air distribution conduits (27);
**characterized in that** said air control manifold assembly (200) is further including:
a conduit mounting assembly (202), having a base (212) for securing the mounting assembly (202) to a support surface (60); two substantially parallel securing rods (214); and respective mounting clamp assemblies (230) for securing the at least two air distribution conduits (27) to the securing rods (214), such that the at least two air distribution conduits (27) are arranged relative to one another in an offset, stacked configuration.

2. The aeration assembly according to claim 1, further comprising a plurality of coupling devices (210) having an elongated tube portion (304, 320) with oppositely disposed first and second ends (306, 308; 322, 324) and locking flanges (300, 302) configured to be received on said first and second ends (306, 308; 322, 324) of said elongated tube portion (304, 320), wherein each of said plurality of coupling devices (210) is configured for attachment to at least one aeration element (1, 100, 102) of said plurality of aeration elements (1, 100, 102).

3. The aeration assembly (400) according to claim 1 or 2, wherein at least a series of said plurality of aeration elements (1, 100, 102) are connected in an end-to-end relationship.

4. The aeration assembly (400) according to claim 1 or 2, wherein each of said at least two air distribution conduits (27) is provided with at least one port (240) arranged at predetermined positions about a circumference of the at least two distribution conduits (27) for connection of multiple coupling devices (210) and aeration elements (1, 100, 102) of said plurality of aeration elements (1, 100, 102) to each of said at least two conduits (27).

5. The aeration assembly (400) of claim 1 or 2, wherein each of said at least one port (240) is configured to receive a threaded end (309, 310) of a coupling device (210) therein.

6. The aeration assembly (400) of claim 1 or 2, further comprising a plurality of adapter elements (326, 328) configured to receive said opposite ends (306, 308; 322, 324) of said elongated tube portion (304, 320), wherein each of said plurality of adapter elements (326, 328) includes a first threaded end portion (332, 334) for engagement with the tube portion (304, 320) and a second threaded end portion (330, 336) for engagement with the air conduit (27).

7. The aeration assembly (400) according to claim 2, wherein the elongated tube portion (320) of said coupling device (210) is curved or bent.

8. The aeration assembly (400) according to claim 7, wherein the curved or bent elongated tube portion (320) has opposite ends (322, 324) configured to receive cooperating ends of adapter elements (326, 328), respectively.

9. The aeration assembly (400) according to claim 2, wherein three air supply conduits (27) are stacked on top of one another.

10. The aeration assembly (400) according to claim 2, wherein the assembly comprises a plurality of zones, wherein in a first one of said zones, the aeration elements (1, 100, 102) are arranged more closely relative to one another than in an adjacent, second one of said zones, and wherein said aeration elements (1, 100, 102) are arranged more closely in said second one of said zones relative to one another than in an adjacent, third one of said zones.

## Patentansprüche

1. Belüftungsanordnung (400), umfassend:
mehrere Belüftungselemente (1, 100, 102); und
eine Luftsteuerverteileranordnung (200), welche aufweist:
mindestens zwei Luftverteilungsleitungen (27) zum Zuführen von Luft zu den mehreren Belüftungselementen (1, 100, 102), wobei jede der mindestens zwei Luftverteilungsleitungen (27) mindestens einen Anschluss (240) aufweist, der an einer ausgewählten Position um einen Umfang der mindestens zwei Luftverteilungsleitungen (27) angeordnet ist;
**dadurch gekennzeichnet, dass** die Luftsteuerverteileranordnung (200) ferner aufweist:
eine Leitungsmontageanordnung (202), welche eine Basis (212) zum Befestigen der Montageanordnung (202) an einer Trägerfläche (60) aufweist; zwei im Wesentlichen parallele Befestigungsstäbe (214); und jeweilige Montageklemmanordnungen (230) zum Befestigen der mindestens zwei Luftverteilungsleitungen (27) an den Befestigungsstäben (214), sodass die mindestens zwei Luftverteilungsleitungen (27) relativ zueinander in einer versetzten, gestapelten Konfiguration angeordnet sind.

2. Belüftungsanordnung nach Anspruch 1, ferner umfassend:
mehrere Kopplungsvorrichtungen (210), welche einen länglichen Röhrenabschnitt (304, 320) mit gegenüberliegend angeordneten ersten und zweiten Enden (306, 308; 322, 324) und Verriegelungsflanschen (300, 302) aufweisen, die eingerichtet sind, um auf den ersten und zweiten Enden (306, 308; 322, 324) des länglichen Röhrenabschnitts (304, 320) aufgenommen zu werden, wobei jede der mehreren Kopplungsvorrichtungen (210) zur Anbringung an mindestens einem Belüftungselement (1, 100, 102) der mehreren Belüftungselemente (1, 100, 102) eingerichtet ist.

3. Belüftungsanordnung (400) nach Anspruch 1 oder 2, wobei mindestens eine Reihe der mehreren Belüftungselemente (1, 100, 102) in einer Ende-zu-Ende-Beziehung verbunden sind.

4. Belüftungsanordnung (400) nach Anspruch 1 oder 2, wobei jede der mindestens zwei Luftverteilungsleitungen (27) mit mindestens einem Anschluss (240) vorgesehen ist, der an vorbestimmten Positionen um einen Umfang der mindestens zwei Verteilungsleitungen (27) zur Verbindung von mehreren Kopplungsvorrichtungen (210) und Belüftungselementen (1, 100, 102) der mehreren Belüftungselemente (1, 100, 102) mit jeder der mindestens zwei Leitungen (27) angeordnet ist.

5. Belüftungsanordnung (400) nach Anspruch 1 oder 2, wobei jeder des mindestens einen Anschlusses (240) eingerichtet ist, um ein Gewindeende (309, 310) einer Kopplungsvorrichtung (210) darin aufzunehmen.

6. Belüftungsanordnung (400) nach Anspruch 1 oder 2, ferner umfassend mehrere Adapterelemente (326, 328), die eingerichtet sind, um die gegenüberliegenden Enden (306, 308; 322, 324) des länglichen Röhrenabschnitts (304, 320) aufzunehmen, wobei jedes der mehreren Adapterelemente (326, 328) einen ersten Gewindeendabschnitt (332, 334) zum Eingriff mit dem Röhrenabschnitt (304, 320) und einen zweiten Gewindeendabschnitt (330, 336) zum Eingriff mit der Luftleitung (27) aufweist.

7. Belüftungsanordnung (400) nach Anspruch 2, wobei der längliche Röhrenabschnitt (320) der Kopplungsvorrichtung (210) gekrümmt oder gebogen ist.

8. Belüftungsanordnung (400) nach Anspruch 7, wobei der gekrümmte oder gebogene längliche Röhrenabschnitt (320) gegenüberliegende Enden (322, 324) aufweist, die eingerichtet sind, um jeweils zusammenwirkende Enden der Adapterelemente (326, 328) aufzunehmen.

9. Belüftungsanordnung (400) nach Anspruch 2, wobei die drei Luftzuführleitungen (27) aufeinander gestapelt sind.

10. Belüftungsanordnung (400) nach Anspruch 2, wobei die Anordnung mehrere Zonen umfasst, wobei in einer ersten der Zonen die Belüftungselemente (1, 100, 102) näher relativ zueinander angeordnet sind als in einer benachbarten, zweiten der Zonen, und wobei die Belüftungselemente (1, 100, 102) in der zweiten der Zonen näher relativ zueinander angeordnet sind als in einer benachbarten, dritten der Zonen.

## Revendications

1. Ensemble d'aération (400) comprenant :
une pluralité d'éléments d'aération (1, 100, 102) ; et
un ensemble de collecteur de commande d'air (200) incluant :
au moins deux conduits de distribution d'air (27) destinés à fournir de l'air à ladite pluralité d'éléments d'aération (1, 100, 102), chacun desdits au moins deux conduits de distribution d'air (27) incluant au moins un orifice (240) disposé à un emplacement sélectionné autour d'une circonférence desdits au moins deux conduits de distribution d'air (27) ;
**caractérisé en ce que** ledit ensemble de collecteur de commande d'air (200) inclut en outre :
un ensemble de montage de conduits (202) présentant une base (212) pour la fixation de l'ensemble de montage (202) sur une surface de support (60) ; deux tiges de fixation (214) substantiellement parallèles ; et des ensembles de serrage de montage (230) respectifs pour la fixation des au moins deux conduits de distribution d'air (27) aux tiges de fixation (214), de telle façon que les au moins deux conduits de distribution d'air (27) sont disposés l'un par rapport à l'autre dans une configuration décalée, empilée.

2. Ensemble d'aération selon la revendication 1, comprenant en outre une pluralité de dispositifs d'accouplement (210) présentant une partie de tube allongée (304, 320) avec des premières et deuxièmes extrémités (306, 308 ; 322, 324) opposées et des brides de verrouillage (300, 302) configurées pour être reçues sur lesdites premières et deuxièmes extrémités (306, 308 ; 322, 324) de ladite partie de tube allongée (304, 320), chacun parmi ladite pluralité de dispositifs d'accouplement (210) étant configuré pour le raccordement à au moins un élément d'aération (1, 100, 102) parmi ladite pluralité d'éléments d'aération (1, 100, 102).

3. Ensemble d'aération (400) selon la revendication 1 ou 2, dans lequel au moins une série de ladite pluralité d'éléments d'aération (1, 100, 102) sont reliés bout à bout.

4. Ensemble d'aération (400) selon la revendication 1 ou 2, dans lequel chacun desdits au moins deux conduits de distribution d'air (27) est pourvu d'au moins un orifice (240) disposé à des emplacements prédéterminés autour d'une circonférence des au moins deux conduits de distribution (27) pour la connexion d'une multitude de dispositifs d'accouplement (210) et d'éléments d'aération (1, 100, 102) parmi ladite pluralité d'éléments d'aération (1, 100, 102) à chacun parmi lesdits au moins deux conduits (27).

5. Ensemble d'aération (400) selon la revendication 1 ou 2, dans lequel chacun parmi lesdits au moins un orifice (240) est configuré pour recevoir une extrémité filetée (309, 310) d'un dispositif d'accouplement (210) dans celui-ci.

6. Ensemble d'aération (400) selon la revendication 1 ou 2, comprenant en outre une pluralité d'éléments d'adaptation (326, 328) configurés pour recevoir lesdites extrémités opposées (306, 308 ; 322, 324) de ladite partie de tube allongée (304, 320), chacun parmi ladite pluralité d'éléments d'adaptation (326, 328) incluant une première partie d'extrémité filetée (332, 334) pour l'engagement avec la partie de tube (304, 320) et une deuxième partie d'extrémité filetée (330, 336) pour l'engagement avec le conduit d'air (27).

7. Ensemble d'aération (400) selon la revendication 2, dans lequel la partie de tube allongée (320) dudit dispositif d'accouplement (210) est courbée ou pliée.

8. Ensemble d'aération (400) selon la revendication 7, dans lequel la partie de tube allongée (320) courbée ou pliée présente des extrémités opposées (322, 324) configurées pour recevoir des extrémités coopérantes d'éléments d'adaptation (326, 328), respectivement.

9. Ensemble d'aération (400) selon la revendication 2, dans lequel trois conduits de distribution d'air (27) sont empilés les uns sur les autres.

10. Ensemble d'aération (400) selon la revendication 2, dans lequel l'ensemble comprend une pluralité de zones, dans lequel, dans une première desdites zones, les éléments d'aération (1, 100, 102) sont disposés plus près les uns des autres que dans une deuxième adjacente desdites zones, et dans lequel lesdits éléments d'aération (1, 100, 102) sont disposés plus près les uns des autres dans ladite deuxième desdites zones que dans une troisième adjacente desdites zones.
